# EUROPÄISCHE PATENTSCHRIFT

(11) **EP 1 532 364 B1**
(45) Veröffentlichungstag und Bekanntmachung des Hinweises auf die Patenterteilung: **23.11.2005**
(21) Anmeldenummer: 03790726.8
(22) Anmeldetag: 15.08.2003
(51) Int. Cl.: F02M 55/02, B23P 15/00, B23P 9/02

(54) **VERFAHREN ZUR BEARBEITUNG EINES WERKSTÜCKES FÜR EINEN KRAFTSTOFFHOCHDRUCKSPEICHER UND WERKSTÜCK ZUR ANWENDUNG DES VERFAHRENS**
METHOD FOR WORKING A WORKPIECE FOR A FUEL HIGH-PRESSURE ACCUMULATOR AND WORKPIECE FOR USING THIS METHOD
PROCEDE D'USINAGE D'UNE PIECE DESTINEE A UN ACCUMULATEUR DE CARBURANT HAUTE PRESSION ET PIECE DESTINEE A LA MISE EN OEUVRE DU PROCEDE

(30) Priorität: 25.08.2002 DE 10239379
(43) Veröffentlichungstag der Anmeldung: 25.05.2005
(73) Patentinhaber: UMFORMTECHNIK BÄUERLE GMBH, 73560 Böbingen/Rems (DE)
(72) Erfinder: BERGMANN,Joachim, W., 99425 Weimar (DE); VIEWEG, Niels, 86391 Stadtbergen (DE)
(74) Vertreter: Kassner, Klaus
(86) Internationale Anmeldenummer: PCT/DE2003/002760
(87) Internationale Veröffentlichungsnummer: WO 2004/020815

(56) Entgegenhaltungen:
- EP-A- 1 226 888
- DE-A- 10 056 405
- GB-A- 758 912
- US-A- 6 050 611
- US-A1- 2002 005 186
- PATENT ABSTRACTS OF JAPAN vol. 1998, no. 14, 31. Dezember 1998 (1998-12-31) -& JP 10 246378 A (USUI INTERNATL IND CO LTD), 14. September 1998 (1998-09-14)
- PATENT ABSTRACTS OF JAPAN vol. 1998, no. 12, 31. Oktober 1998 (1998-10-31) -& JP 10 196869 A (USUI INTERNATL IND CO LTD), 31. Juli 1998 (1998-07-31)
- PATENT ABSTRACTS OF JAPAN vol. 2002, no. 02, 2. April 2002 (2002-04-02) & JP 2001 280218 A (USUI INTERNATL IND CO LTD), 10. Oktober 2001 (2001-10-10)

## Beschreibung

Die Erfindung betrifft ein Verfahren zur Bearbeitung eines Werkstückes für einen Kraftstoffhochdruckspeicher (Rail) eines Common-Rail-Kraftstoffeinspritzsystems (System) für Brennkraftmachinen gemäß dem Oberbegriff des Anspruchs 1, wie z.B. aus der US-A-6050611 bekannt. Ferner betrifft die Erfindung ein Werkstück zur Anwendung des Verfahrens, wobei das Werkstück einen axialen Innenraum für das Rail und von der Peripherie des Rails laufende Querbohrungen mit Verschneidungen zum Innenraum aufweist, und in der weiteren Fertigung an den axialen und peripherien Anschlußstellen des Rails Anschlußmittel zum System vorgesehen sind, gemäß dem Oberbegiff des Anspruchs 5, wie z.B. aus der JP-A-10 246378 bekannt.

### Stand der Technik

Derartige Systeme sind z. B. in den DE 197 44 762 A 1 und DE 199 48 338 A 1 beschrieben. So wird bei modernen Dieselmotoren die Verteilung des Einspritzdruckes auf die Zylinder durch das besagte Common-Rail-Kraftstoffeinspritzsystem (System) durchgeführt. Das System umfaßt ein Steuergerät, eine Hochdruckpumpe, Hochdruckleitungen, Injektoren und das Rail, wie es auch in der DE 198 53 090 A 1 dargestellt wurde.

Das Rail kann herkömmlich als rohrförmiges Werkstück durch Ziehen oder Walzen (siehe DE 197 44 762 A 1) sowie Warmschmieden oder Kaltschmieden und weiteres Bearbeiten erzeugt werden. Es ist in seiner Funktion als Vorratsbehälter gestaltet. In diesem Vorratsbehälter liegt ständig der hohe Druck an. Erreicht wurden die geforderten Festigkeitseigenschaften bisher u. a. durch ein gezieltes Abkühlen aus der Schmiedewärme. Deshalb mußte das Werkstück für dieses Rail z. B. aus einem vergüteten 42CrMo4 hergestellt werden, was zu sehr hohen Kosten führte. Nachteilig war auch, daß bei bisherigen Rails nur ein Druck von bis zu etwa 1400 bar aufgebracht werden konnte. Typischerweise kommt es während des Einspritzens stets zu einem leichten Druckabfall. Danach findet wieder ein Druckaufbau statt. Diese häufig wechselnden Spannungen im Rail erforderten eine entsprechende hohe Qualität des Werkstoffes.

Um der aktuellen Forderung nach weiterer Geräuscharmut der Dieselmotoren und niedrigeren Verbräuchen gerecht zu werden, muß jedoch der Einspritzdruck von herkömmlich 1400 bar auf mindestens 2000 bar und wegen der Wechselspannungen darüber hinaus erhöht werden.

Zur Erhöhung der Hochdruckfestigkeit eines Rails wurde gemäß DE 199 45 316 A 1 bei dem rohrförmigen Grundkörper, dessen Innenraum mit mehreren radialen Anschlußöffnungen in Verbindung steht, dieser Innenraum bezogen auf die Längsachse exzentrisch gestaltet, wobei die Anschlußöffnungen z. B. tangential in den Innenraum münden.

Zum gleichen Zweck offenbart die schon erwähnte DE 199 48 338 A 1 ein Verfahren, mit dem der Grundkörper im Bereich der Anschlußöffnungen verformt wird, um die Hochdruckfestigkeit im Betrieb zu erhöhen.

Schließlich soll nun entsprechend der DE 100 56 405 A 1 die erhöhte Druckfestigkeit derartiger Kraftstoffhochdruckspeicher, insbesondere bei schwellender Druckbeanspruchung dadurch erreicht werden, daß die Innenwand in dem Bereich der Verschneidung von Innenwand und Verbindungsbohrung im wesentlichen eben ausgebildet ist.

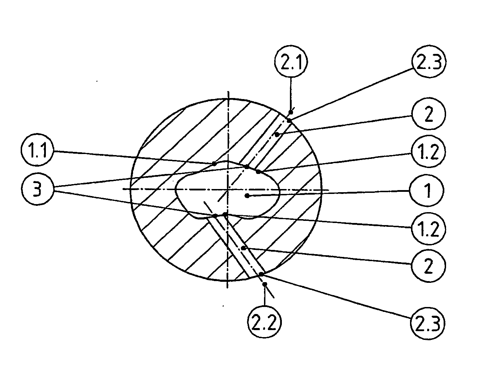

Dazu wird gemäß den Fig. 1 bis 9 eine Vielzahl von Querschnittsformen für den Innenraum offenbart, um der schwellenden und hohen Druckbelastung im Betrieb zu begegnen. Damit ist scheinbar das eingangs dargestellte Problem gelöst.

Insgesamt hat sich herausgestellt, daß das Problem der Erhöhung der Druckfestigkeit insbesondere im Bereich der Verschneidung der axialen Bohrung bzw. des Innenraumes mit den radialen Anschlußöffnungen wie Querbohrungen liegt, weil dort die schadenskritischen Stellen anzutreffen sind.

In der Offenbarung gemäß der DE 100 56 405 A 1 ist für die dortige Lösung als Vorteil angegeben, daß durch die Varianten der erfindungsgemäßen Ausgestaltungen der Innenwand im Verschneidungsbereich mit der Verbindungbohrung infolge der Verformung des Kraftstoffhochdruckspeichers unter Druck im Verschneidungsbereich Druckspannungen induziert werden, die einen Teil der aus dem Innendruck resultierenden Zugspannungen und Spannungsspitzen im Verschneidungsbereich egalisieren. Die Druckfestigkeit dieses Kraftstoffhochdruckspeichers, insbesondere bei schwellender Druckbeanspruchung, soll demzufolge durch die vorgeschlagenen Querschnittsformen gesteigert werden.

Dieser Lösungsweg erscheint problematisch zu werden. Es ist anzunehmen, daß die dort aufgezeigten Querschnittsformen, nicht zuletzt wegen der verbleibenden Risiken durch die scharfeckigen Übergänge der jeweiligen Querschnittsform, nicht in der Lage sind, den beabsichtigten Vorteil - wie die Induzierung von Druckspannungen infolge der Verformung des Rails unter Druck - im Verschneidungsbereich zu realisieren. Hinzu kommt, daß die vorgeschlagenen Querschnittsformen durch spanabhebende Formgebung herzustellen sind, was von vornherein nicht für eine im Werkstoff homogen verteilbare Festigkeit im Zusammenhang mit dem zu lösenden Problem sorgt.

Auf Grund der verbleibenden Risiken, wie
- nicht definierte Beabeitungsverfahren und ihre Auswirkungen auf die Formgebungen und den Spannungsverlauf im Werkstoff des hier vorliegenden Werkstückes und
- noch nicht hinreichend untersuchte und definierte Spannungszustände im Zusammenhang mit den zu bildenden Querschnittsformen sowie
- daraus verbleibende Gestaltungsmöglichkeiten für eine optimierte Querschnittsform
ist noch Raum für neue Lösungsansätze gegeben.

Entgegen der DE 100 56 405 A 1 ist deshalb das Ziel, Druckspannungen infolge der Verformung des Rails unter Druck im Verschneidungsbereich zu induzieren, nicht anzustreben.

So bleiben letztlich bei einem Werkstück für ein Rail mit im Querschnitt kreisförmiger Innenraumkontur die sich an der Verschneidung der Querbohrung mit dem Innenraum ergebenden höchsten, die Festigkeit bestimmenden nachteiligen Beanspruchungen erhalten.

### Darstellung der Erfindung

Die hiesige Erfindung stellt sich die Aufgabe, die Geometrie der Querschnitte der axialen Bohrung für den Innenraum des Rails verfahrensgemäß so zu gestalten und zu verbessern, daß bei einem danach gefertigten Werkstück die Schwingungsbeanspruchung des Rails bei gegebener Innendruckbelastung insbesondere im kritischen Verschneidungsbereich abgesenkt wird, um die Dauerfestigkeit bzw. die Zeit- und Betriebsfestigkeit des Kraftstoffhochdruckspeichers zu steigern.

Demzufolge soll die erfindungsgemäße Lösung gerade nicht den in der DE 100 56 405 A 1 angegebenen Effekt hervorbringen.

Erfindungsgemäß wird diese Aufgabe insgesamt mit den Verfahrensschrittfolgen entsprechend den Ansprüchen 1 bis 4 gelöst. Das nach dem Verfahren bearbeitete erfindungsgemäße Werkstück weist die Merkmale gemäß den Ansprüchen 5 bis 9 auf.

Insgesamt wird gegenüber dem Stand der Technik als neuer und überraschender Effekt erreicht, daß durch die Querschnittskontur mit einem variablen stetigen Krümmungsverlauf und der Anordnung der Querbohrungsverschneidung in Bereichen mit geringer Krümmung die Beanspruchungen an den Verschneidungen ungefähr halbiert werden.

### Kurze Beschreibung der Zeichnungen

In der Zeichnung ist ein Ausführungsbeispiel eines erfindungsgemäß bearbeiteten Werkstückes für ein Rail im Querschnitt dargestellt.

### Bester Weg zur Ausführung der Erfindung

Der gemeinsame Speicher als Kernstück eines Common-Rail-Kraftstoffeinspritzsystems wird im folgenden Ausführungsbeispiel mit Rail bezeichnet. Im Standardfall ist dieses Rail als Ausgangswerkstück ein rohrförmiger Körper mit einem axialen Innenraum 1 und offenen Enden für die axialen Anschlußstellen zum System. Die Querbohrungen 2 verbinden den axialen Innenraum 1 mit den peripheren Anschlußstellen 2.3 zum System. An das Rail sind über diese Anschlußstellen (in der Zeichnung nicht dargestellt) die Pumpenleitung zur Dieseleinspeisung, die Einspritzleitungen, die zu den Einspritzdüsen führen, und in der Regel ein Drucksensor und ein Regelventil angeschlossen.

Das Rail erscheint zwar als ein geometrisch einfacher Körper, jedoch werden an diesen außergewöhnlich hohe, eingangs beschriebene Festigkeitsanforderungen gestellt. Besonders kritische Bereiche sind die Verschneidungen 3 von dem axialen Innenraum 1 und den Querbohrungen 2, aber auch die Anschlußstellen 2.3 mit den nicht dargestellten Anschlüssen für die Einspritzleitungen und Regelelemente sowie die Anschlußstellen an den Enden des axialen Innenraums 1. Letztere müssen druckdicht mit Stopfen oder Fittings verschlossen werden. Im Sinn der eingangs gestellten Aufgabe müssen daher nicht nur die Verschneidungen 3 im Rail selbst, sondem auch die axialen und peripheren Anschlußbereiche dauerfest ausgebildet werden.

Durch das erfindungsgemäße Verformen des rohrförmigen Werkstückes um einen Innendorn wird zunächst eine geometrische Konstruktionsoptimierung des axialen Innenraums 1 und ein höherfester Werkstoffzustand erreicht, indem der Querschnitt des Innenraums zu einer Kontur mit einem variablen stetigen Krümmungsverlauf 1.1 ausgebildet wird und dabei in dieser Kontur Bereiche mit geringer Krümmung 1.2 geformt sind. In diese Bereiche mit geringer Krümmung 1.2 werden dann die Querbohrungen 2 eingebracht.

Im Ergebnis dieser Bearbeitung wird in den Bereichen der Verschneidung 3 die Beanspruchung gegenüber einem Werkstück mit kreisförmiger Kontur des Innenraumes bzw. gegenüber den Ausführungen des Standes der Technik halbiert, wenn es in einem Rail unter Betriebsdruck steht.

Je nach Anordnung bzw. Lage des Rail im System können die Querbohrungen 2 als radiale Querbohrungen 2.1 und/oder als Querbohrung mit Versatz 2.2 ausgeführt werden. Es empfiehlt sich dabei, die Kanten des zwischen dem Innenraum 1 und den Querbohrungen 2 entstandenen Verschneidungen 3 sowie die Kanten der peripheren Anschlußstellen 2.3 und der Enden des Innenraumes 1 wie z. B. durch Entgraten zu bearbeiten.

Die in der Zeichnung dargestellte Kontur 1.1 ist durch Hämmern oder Kneten um einen Innendorn herstellbar. Dabei wird die Werkstofffestigkeit in Abhängigkeit von der Temperatur und dem Umformgrad gezielt bei Temperaturen bis zu ca. 300° C eingestellt. Das Kneten bzw. Hämmern um einen Innendorn eröffnet die Möglichkeit, sowohl den axialen Innenraum abweichend von einer Kreisgeometrie im Querschnitt erfindungsgemäß und wie in der Fig. dargestellt zu gestalten, und zwar mit festigkeitsstabilisierenden Übergängen sowie ohne scharfe Ecken bzw. ungünstige Kerbwirkungen zu erzeugen, als auch eine homogen verteilte Werkstoffverfestigung zu realisieren.

Schließlich können so schon allein mit der Verfahrensschrittfolge gemäß Anspruch 1 Werkstücke erzeugt werden, die die Beanspruchungen im Bereich der Verschneidungen 3 eines Rails bei einem im Betrieb herrschenden hohen Innendruck halbieren und so die Dauerfestigkeit erhöhen.

Für eine extrem hohe Beanspruchung des Rails im Betrieb wird in einer auf die vorbeschriebene Verfahrensschrittfolge aufbauenden, zweiten Verfahrensschrittfolge das Werkstück im gesamten oberflächennahen Bereich einer Randschichtverfestigung durch Nitrieren oder Einsatzhärten unterzogen. Dabei werden im gesamten oberflächennahen Bereich Druckeigenspannungen ausgeprägt.

Das so behandelte Werkstück weist nun als weiteren Vorteil einen sogenannten Gradientenwerkstoff auf: Im Inneren hat der Werkstoff die aus Legierung, Wärmebehandlung und Kaltumformung resultierende, homogen verteilte Festigkeit und in der Randschicht von z.B. 0,4 mm Dicke eine zum Rand hin ansteigende Festigkeit Die durch das Kneten erreichten Festigkeitswerte des Werkstoffes sowie der durch das Nitrieren oder Einsatzhärten erzielte Härteverlauf im Werkstück verschmelzen funktionell zu einem Gesamteffekt. Die mit der erfindungsgemäßen Aufgabenstellung angestrebte Steigerung der Dauerfestigkeit wird so maximal realisiert, und es werden gerade keine Druckspannungen im Bereich der Verschneidungen 3 induziert. Vorteilhaft für die Anwendung in der Praxis läßt sich aus der Härte die lokale Zugfestigkeit und daraus wiederum die lokale, dauerfest ertragbare Spannungsschwingweite bei Zugschwellbeanspruchung zur Auslegung der Rails ableiten.

Mit dieser vorteilhaften verfahrensmäßigen Kombination werden die auslegungsrelevanten Werte des Werkstücks durch die Festigkeit des gekneteten Kemwerkstoffes und die Ausprägung von Druckeigenspannungen bei im Betrieb herrschenden Innendruck durch die Wirkung des Nitrierens oder Einsatzhärtens im oberflächennahen Bereich bestimmbar.

Insgesamt kann nach dem erfindungsgemäßen Verfahren, beispielsweise entsprechend den kombinierten ersten und zweiten Schrittfolgen, ein Werkstück für ein Rail erzeugt werden, welches (im Vergleich zu einem Werkstück mit im wesentlichen kreisförmiger Innenraumkontur, bei dem sich an der Verschneidung der Querbohrung mit dem Innenraum die höchsten, die Festigkeit bestimmenden Beanspruchungen ergeben) eine Kontur mit einem variablen stetigen Krümmungsverlauf 1.1 und eine Einmündung der Querbohrungen 2 in Bereiche mit geringer Krümmung 1.2 aufweist, wodurch die Beanspruchungen an den Verschneidungen 3 im Betrieb ungefähr halbiert sind.

Ein zusätzlicher Effekt ergibt sich noch dadurch, daß an den axialen und peripheren Anschlußstellen 2.3 infolge der Randschichtverfestigung eine verbesserte Dichtung zu den Anschlußmitteln zum System erreichbar wird.

### Gewerbliche Anwendbarkeit

Entsprechend den mit Versuchen erprobten Ausführungsbeispielen und Berechnungen wurde die erfindungsgemäße Lösung der gestellten Aufgabe nachgewiesen, so daß eine industrielle Nutzung des Verfahrens und Herstellung des Werkstücks für die Verwendung als Rail mit den angestrebten verbesserten Gebrauchseigenschaften möglich ist.

## Patentansprüche

1. Verfahren zur Bearbeitung eines aus einem aushärtenden, ferritisch-perlitischen Stahl bestehenden, rohrförmigen Werkstücks, welches
- für einen Kraftstoffhochdruckspeicher (Rail) eines Common-Rail-Kraftstoffeinspritzsystems (System) von Brennkraftmaschinen bestimmt ist.
- einen axialen Innenraum (1) und von der Peripherie des Rails laufende Querbohrungen (2) mit Verschneidungen (3) zum Innenraum (1) aufweist und
- an den axialen Anschlußstellen und peripheren Anschlußstellen (2.3) des Rails mit Anschlußmitteln zum System auszustatten ist,
zur Absenkung der Schwingungsbeanspruchung und Steigerung der Dauerfestigkeit des Rails, **gekennzeichnet durch**
a) Verformen des werkstückes um einen Innendorn bei Temperaturen bis zu ca. 300 ° C zur Verfestigung des Werkstoffs und zur Formgebung des Innenraums (1), wobei
- die Werkstofffestigkeit in Abhängigkeit von der Temperatur und dem Umformgrad gezielt eingestellt wird,
- der Querschnitt des Innenraums (1) zu einer Kontur mit einem variablen stetigen Krümmungsverlauf (1.1) ausgebildet wird und
- in der Kontur (1.1) mindestens ein Bereich mit geringer Krümmung (1.2) geformt wird.
b) Einbringen der Querbohrungen (2) derart, daß diese in den Bereich mit geringer Krümmung (1.2) einmünden und
c) Einwirken auf eine weitere Erhöhung der Festigkeit des Werkstoffes in den oberflächennahen Bereichen des Werkstückes zur Erzeugung von Druckeigenspannungen.

2. Verfahren nach Anspruch 1, **dadurch gekennzeichnet, daß** das Verformen durch Hämmern oder Kneten erfolgt.

3. Verfahren nach Anspruch 1, **dadurch gekennzeichnet, daß** die Kanten der zwischen dem Innenraum (1) und den Querbohrungen (2) entstandenen Verschneidungen (3) sowie die Kanten der peripheren Enden der Querbohrungen (2) und der Enden des Innenraums (1) entgratet werden.

4. Verfahren nach Anspruch 1 bis 3, **dadurch gekennzeichnet, daß** das Einwirken auf eine weitere Erhöhung der Festigkeit des Werkstoffes in den oberflächennahen Bereichen des Werkstückes mittels Randschichtverfestigung durch Nitrieren oder Einsatzhärten erfolgt.

5. Rohrförmiges Werkstück aus einem ausscheidungshärtenden, ferritisch-perlitischen Stahl, welches
- für einen Kraftstoffhochdruckspeicher (Rail) eines Common-Rail-Kraftstoffeinspritzsystems (System) von Brennkraftmaschinen bestimmt ist;
- einen axialen Innenraum (1) und von der Peripherie des Rails mit Verschneidungen (3) zum Innenraum (1) laufende Querbohrungen (2) aufweist und
- an den axialen Anschlußstellen und peripheren Anschlußstellen (2.3) des Rails mit Anschlußmitteln zum System auszustatten ist.
bearbeitet nach dem Verfahren gemäß einem der Ansprüche 1 bis 4, wobei der Querschnitt des Innenraums (1) eine Kontur mit einem variablen stetigen Krümmungsverlauf (1.1) aufweist, in der mindestens ein Bereich mit geringer Krümmung (1.2) besteht, in den die Querbohrungen (2) radial, schräg und/oder versetzt laufend einmünden, **dadurch gekennzeichnet, daß** das Werkstück
- einen Gradientenwerkstoff,
- im Inneren des Werkstoffs eine aus Verformen um einen Innendorm bei Temperaturen bis zu en 300° C resultierende und homogen verteite Festigkeit und
- im der Randschicht des Werkstoffs eine zum Rand hin ansteigende Festigkeit aufweist.

6. Rohrförmiges Werstück nach Anspruch 5, **dadurch** gekenneichnet, daß bezogen auf den Querschnitt des Werkstücks (1) mehrere Bereiche mit geringer Krümmung (1.2) vorgesehen sind, in die Querbohrungen (2) einmünden.

7. Rohrförmiges Werkstück nach Anspruch 5, **dadurch gekennzeichnet, daß** die Querbohrungen (2.1, 2.2) in einem dieser Bereiche (1.2) radial laufend und in einem weiteren Bereich (1.3) schräg oder versetzt laufend einmünden.

8. Rohrförmiges Werkstück nach einem der Ansprüche 5 bis 7, **dadurch gekennzeichnet, daß** der Bereich (1.2) konkav ausgebildet ist

9. Rohrförmiges Werkstück nach einem der Ansprüche 5 bis 7, **dadurch gekennzeichnet, daß** der Bereich (1.2) konvex ausgebildet ist.

## Claims

1. A method for processing a tubular workpiece comprising a precipitation hardened, ferritic-pearlitic steel, which
- is intended for a high-pressure fuel accumulator (rail) of a common rail fuel injection system (system) of internal combustion engines,
- has an axial inner chamber (2) and transverse holes (2) running from the periphery of the rail having intersections (3) with the inner chamber (1), and
- is to be equipped with connection means to the system at the axial connection points and peripheral connection points (2, 3) of the rail,
to reduce the vibratory stresses and increase the fatigue strength of the rail, **characterized by**
a) deforming the workpiece around an internal mandrel at temperatures up to approximately 300°C to solidify the material and to shape the inner chamber (1),
- the material strength being set intentionally as a function of the temperature and the degree of deformation,
- the cross-section of the inner chamber (1) being implemented as a contour having a variable continuous curvature (1.1), and
- at least one region having lesser curvature (1.2) being shaped into the contour (1.1),
b) introducing the transverse holes (2) in such a way that they discharge into the region having lesser curvature (1.2), and
c) acting to further elevate the strength of the material in the regions of the workpiece proximal to the surface to produce pressure internal stresses.

2. The method according to claim 1, **characterized in that** the deformation is performed through hammering or kneading.

3. The method according to claim 1, **characterized in that** the edges of the intersections (3) arising between the inner chamber (1) and the transverse holes (2) and the edges of the peripheral ends of the transverse holes (2) and the ends of the inner chamber (1) are deburred.

4. The method according to claims 1 through 3, **characterized in that** the acting to further elevate the strength of the material in the regions of the workpiece proximal to the surface is performed using surface hardening through nitriding or case hardening.

5. A tubular workpiece comprising a precipitation hardened, ferritic-pearlitic steel, which
- is intended for a fuel high-pressure accumulator (rail) of a common rail fuel injection system (system) of internal combustion engines,
- has an axial inner chamber (1) and transverse holes (2) running from the periphery of the rail having intersections (3) with the inner chamber (1), and
- is to be equipped with connection means to the system at the axial connection points and peripheral connection points (2, 3) of the rail,
processed according to the method according to one of claims 1 through 4, the cross-section of the inner chamber (1) having a contour having a variable continuous curvature (1.1) in which at least one region having lesser curvature (1.2) exists, into which the transverse holes (2) discharge running radially, diagonally, and/or offset, **characterized in that** the workpiece has
- a gradient material,
- a homogeneously distributed strength in the interior of the workpiece which results from deformation around an internal mandrel at temperatures up to approximately 300°C, and
- a strength increasing toward the boundary in the boundary layer of the workpiece.

6. The tubular workpiece according to claim 5, **characterized in that**, in relation to the cross-section of the workpiece (1), multiple regions having lesser curvature (1.2) are provided, into which the transverse holes (2) discharge.

7. The tubular workpiece according to claim 5, **characterized in that** the transverse holes (2.1, 2.2) discharge running radially in one of these regions (1.2) and discharge running diagonally or offset in a further region (1.3).

8. The tubular workpiece according to one of claims 5 through 7, **characterized in that** the region (1.2) is implemented as concave.

9. The tubular workpiece according to one of claims 5 through 7, **characterized in that** the region (1.2) is implemented as convex.

## Revendications

1. Procédé de traitement d'une pièce à usiner tubulaire, composée d'un acier durcissable, ferrito-perlitique qui
- est destinée à un accumulateur haute pression de carburant (Rail) d'un système d'injection de carburant Common-Rail,
- comporte un espace intérieur axial (1) et des alésages transversaux (2) s'écoulant à partir du Rail, avec des coupes (3) vers l'espace intérieur (1) et
- doit être équipée de moyens de raccordement sur le système sur les points de raccordement axiaux et les points de raccordement périphériques (2.3)
pour baisser les contraintes d'oscillations et pour augmenter l'endurance du Rail, **caractérisé par**
a) déformation de la pièce à usiner autour d'un mandrin intérieur à des températures jusqu'à 300°C pour consolider la matière et pour façonner l'espace intérieur (1),
- la solidité de la matière étant réglée de façon ciblée, en fonction de la température et du degré de déformation,
- la section transversale de l'espace intérieur (1) étant conçue avec un contour à trajet de courbure (1.1) stable variable et
- au moins une zone de plus faible courbure (1.2) étant formée sur le contour (1.1),
b) Ménagement des alésages transversaux (2) de façon à ce qu'ils débouchent dans la zone de plus faible courbure (1.2) et
c) Influence pour une augmentation encore plus poussée de la solidité de la matière dans les zones proches de la surface de la pièce à usiner pour créer de propres tensions de compression.

2. Procédé selon la revendication 1, **caractérisé en ce que** la déformation est assurée par martelage ou par malaxage.

3. Procédé selon la revendication 1, **caractérisé en ce que** les bord des coupes (3) obtenues entre l'espace intérieur (1) et les alésages transversaux (2), ainsi que les bords des extrémités périphériques des alésages transversaux (2) et des extrémités de l'espace intérieur (1) sont ébarbés.

4. Procédé selon la revendication 1 à 3, **caractérisé en ce que** l'influence sur une augmentation plus poussée de la solidité de la matière dans les surfaces proches de la surface de la pièce à usiner est assurée par consolidation de la couche de bordure par nitruration.

5. Pièce à usiner tubulaire en un acier durcissable, ferrito-perlitique qui
- est destinée à un accumulateur haute pression de carburant (Rail) d'un système d'injection de carburant Common-Rail de moteurs à combustion interne,
- comporte un espace intérieur axial (1) et des alésages transversaux (2) s'écoulant à partir du Rail, avec des coupes (3) vers l'espace intérieur (1) et
- doit être équipée de moyens de raccordement sur le système sur les points de raccordement axiaux et les points de raccordement périphériques (2.3)
usinée selon le procédé selon l'une quelconque des revendications 1 à 4, la section transversale de l'espace intérieur (1) comportant un contour avec un trajet de courbure (1.1) stable variable, dans lequel se trouve au moins une zone de faible courbure (1.2), dans laquelle les alésages transversaux (2) s'embouchent en direction radiale, de façon inclinée et/ou déportée, **caractérisée en ce que** la pièce à usiner comporte
- une matière à gradient,
- une solidité à l'intérieur de la matière résultant de la déformation autour d'un mandrin intérieur à des températures jusqu'à environ 300°C et répartie de façon homogène et
- dans la couche de bordure de la matière, une solidité augmentant en direction de la bordure.

6. Pièce à usiner tubulaire selon la revendication 5, **caractérisée en ce que** par rapport à la section transversale de la pièce à usiner (1), on a prévu plusieurs zones de faible courbure (1.2) dans lesquelles débouchent les alésages transversaux (2).

7. Pièce à usiner tubulaire selon la revendication 5, **caractérisée en ce que** les alésages transversaux (2.1, 2.2) s'étendent en direction radiale dans l'une de ces zones (1.2) et s'embouchent en s'étendant de façon oblique ou déportée dans une autre zone (1.3).

8. Pièce à usiner tubulaire selon l'une quelconque des revendications 5 à 7, **caractérisée en ce que** la zone (1.2) est conçue de façon concave.

9. Pièce à usiner selon l'une quelconque des revendications 5 à 7, **caractérisée en ce que** la zone (1.2) est conçue de façon convexe.
